# EUROPEAN PATENT APPLICATION

(11) **EP 4 316 739 A1**
(43) Date of publication of application: **07.02.2024**
(21) Application number: 22776075.8
(22) Date of filing: 23.03.2022
(51) Int. Cl.: B25J 9/00, B25J 9/12, B25J 9/16, B25J 19/02, C08L 27/16, C08J 3/075

(54) **SOFT WEARABLE DRIVING SYSTEM**

(30) Priority: 24.03.2021 KR 20210037686
(71) Applicant: Hexarhumancare Co., Ltd, Ansan-si, Gyeonggi-do 15588 (KR)
(72) Inventor: LEE, Dong Chan, Seoul 04974 (KR)
(74) Representative: V.O.
(86) International application number: PCT/KR2022/004029
(87) International publication number: WO 2022/203375

(57) **Abstract**

Disclosed herein is a soft wearable driving system including a body part formed of a deformable flexible material and having a shape extending in a plane, the body part being deformed in a manner of at least one of tensioning, compression, or bending in response to a magnitude of a load voltage, a sensor arranged on one side of the body part of the flexible material to sense a level of muscle activity in an installation area of the body part on the human body, and a controller configured to control the load voltage of the body part based on information sensed by the sensor. In this configuration, a lightweight system that provides high power for long periods of use may be provided, thereby improving usability.

## Description

### [Technical Field]

The present disclosure relates to a soft wearable driving system, and more particularly, to a soft wearable driving system that employs a variable rigidity metastructure to provide light weight and flexibility for improved usability.

### [Background Art]

A wearable robot is a robotic system that adds mechanical strength to improve a user's ability to walk or carry heavy objects. These robotic systems are designed to surround the user, combining human intelligence with the robot's body, and can be applied in a wide range of fields.

For general strength support or gait support, robotic systems with a rigid exoskeleton structure are provided. In addition, in recent years, wearable soft robotic systems based on the concept of artificial muscles using pneumatic pressure, or robotic systems that can be adjusted in length using wires, elastic cuffs, or knots have been proposed.

However, the technology for these various robotic systems is still lacking in various technical areas, such as body-customized multi-degree-of-freedom exoskeletons that do not interfere with the user's movements, mobile motors and hydraulic actuators that can generate large power for a long time, and sensors that can recognize the user's movements. Thus, in recent years, there has been a continuous demand for research to improve the performance of robotic systems in various functional aspects such as the above.

### [Disclosure]

### [Technical Problem]

It is an object of the present disclosure to provide a soft wearable driving system with improved usability by enabling driving support using a variable rigidity metastructure using an electrode active reaction.

### [Technical Solution]

In accordance with one aspect of the present disclosure, provided is a soft wearable driving system including a body part formed of a deformable flexible material and installed on a human body in a shape extending in a plane, the body part being deformed in a manner of at least one of tensioning, compression, or bending in response to a magnitude of a load voltage, a sensor arranged on one side of the body part of the flexible material to sense a level of muscle activity in an installation area of the body part on the human body, and a controller configured to control the load voltage of the body part based on information sensed by the sensor.

The body part and the sensor may be integrated as one body, wherein the body part may be provided as at least one patch removably attached to the human body with an adhesive layer arranged between the body part and the sensor to provide adhesion.

The body part may include a three-dimensional textile actuator.

The sensor may include a three-dimensional pressure textile sensor or strain gauges printed in a predetermined pattern on one side of the body part.

The body part may include a body including a metastructure formed of a material elastically deformable in multiple directions and having a rigidity variable by electrode activation, a gel layer of a gel type charged inside the metastructure and deformed in response to a voltage, and a surface layer formed on both sides of the metastructure by plasma etching such that the voltage is applied thereto, and an adhesive layer laminated to one side of the body with the sensor positioned between adhesive layer and the body, the adhesive layer providing adhesion.

The gel layer may include a polymer copolymer including PolyVinyliDene Fluoride-HexaFluoroPropylene (PVDF-HFP) inserted in the form of a gel into the metastructure.

The surface layer is formed by operations including treating a surface of the metastructure with the plasma etching by argon or nitrogen, fixing an electrode solution, and immersing the metastructure in an ionization solution to accelerate ionic migration.

The metastructure may include a plurality of unit structure cells formed from a metamaterial, wherein the plurality of unit structure cells may form an interconnected lattice structure, or have a cross chiral honeycomb structure.

The plurality of unit structure cells may include a plurality of widthwise extension stems extending in a width direction, and a plurality of thicknesswise extension stems extending in a thickness direction to intersect the plurality of widthwise extension stems. The plurality of widthwise extension stems may include a plurality of first and second widthwise inclined portions inclined in opposite directions to each other, and a plurality of widthwise connectors connecting the first and second widthwise inclined portions such that the first and second widthwise inclined portions are inclined with respect to each other. The plurality of thicknesswise extension stems may include a plurality of first and second thicknesswise inclined portions inclined in opposite directions to each other and intersecting the first and second widthwise inclined portions, respectively, and a plurality of thicknesswise connectors connecting the first and second thicknesswise inclined portions such that the first and second thicknesswise inclined portions are inclined with respect to each other.

The first and second widthwise inclined portions may each be inclined to form a first angle with respect to the widthwise connectors, and the first and second thicknesswise inclined portions may be inclined to form a second angle different from the first angle with respect to the thicknesswise connectors.

The sensor may include a pair of support layers, and a sponge layer arranged between the pair of support layers and having a plurality of pores, the sponge layer being compressible by a change in pressure in response to the level of muscle activity. A size of the plurality of pores may increase or decrease from one of the pair of support layers to the other.

In accordance with another aspect of the present disclosure, provided is a soft wearable driving system including a body part having a flexible, deformable structure embedded therein, the body part being deformed in a manner of at least one of tensioning, compression, or bending in response to a change in a load voltage, a sensor positioned between the body part and a human body to sense ma level of muscle activity in an installation area of the human body having the body part installed therein, and a controller configured to control the load voltage of the body part based on information detected by the sensor, wherein the body part and the sensor may be integrated as one body and removably attached to at least one place on the human body.

The body part may include a three-dimensional textile actuator having a metastructure, wherein the sensor may include a three-dimensional pressure textile sensor or strain gauges printed in a predetermined pattern on one side of the body part.

The body part may include a body including a metastructure formed of a material elastically deformable in multiple directions to enable electrode activation, a gel layer of a gel type charged inside the metastructure and deformed in response to a voltage, and a surface layer formed on both sides of the metastructure by plasma etching such that the voltage is applied thereto, and an adhesive layer laminated to one side of the body with the sensor positioned between adhesive layer and the body, the adhesive layer providing adhesion.

The gel layer may include a polymer copolymer including PolyVinyliDene Fluoride-HexaFluoroPropylene (PVDF-HFP) inserted in the form of a gel into the metastructure.

The surface layer is formed by operations including treating a surface of the metastructure with the plasma etching by argon or nitrogen, fixing an electrode solution, and immersing the metastructure in an ionization solution to accelerate ionic migration.

The metastructure may include a plurality of unit structure cells formed from a metamaterial, wherein the plurality of unit structure cells may form an interconnected lattice structure, or have a cross chiral honeycomb structure.

The plurality of unit structure cells may include a plurality of widthwise extension stems extending in a width direction, and a plurality of thicknesswise extension stems extending in a thickness direction to intersect the plurality of widthwise extension stems. The plurality of widthwise extension stems may include a plurality of first and second widthwise inclined portions inclined in opposite directions to each other, and a plurality of widthwise connectors connecting the first and second widthwise inclined portions such that the first and second widthwise inclined portions are inclined with respect to each other. The plurality of thicknesswise extension stems may include a plurality of first and second thicknesswise inclined portions inclined in opposite directions to each other and intersecting the first and second widthwise inclined portions, respectively, and a plurality of thicknesswise connectors connecting the first and second thicknesswise inclined portions such that the first and second thicknesswise inclined portions are inclined with respect to each other.

The first and second widthwise inclined portions may each be inclined to form a first angle with respect to the widthwise connectors, and the first and second thicknesswise inclined portions may be inclined to form a second angle different from the first angle with respect to the thicknesswise connectors.

The sensor may include a pair of support layers, and a sponge layer arranged between the pair of support layers and having a plurality of pores, the sponge layer being compressible by a change in pressure in response to the level of muscle activity, wherein a size of the plurality of pores may increase or decrease from one of the pair of support layers to the other.

### [Advantageous Effects]

First, according to the present disclosure having the above configuration, a lightweight, flexible, and deformable soft wearable driving system extending in a plane may be attached to a user to support muscle strength, which is advantageous for miniaturization and practical use.

Second, by identifying the degree of muscle activity in each portion with the sensor and inducing tensile, compressive, and bending deformations of the body part, muscle strength support and gait support may be implemented even at low voltages. Accordingly, uniform output power may be generated even during long-term use.

Third, as a body with flexible material properties and a sensor are integrated into a patch that can be attached to a human body, a wearable soft exoskeleton may be provided.

Fourth, a simple structure capable of varying the rigidity of the body according to the muscle activity of the attached area without the need for conventional air pressure or hydraulic pressure may be provided, thereby providing an economical advantage and excellent accessibility to a wide range of users.

### [Description of Drawings]

FIG 1 schematically illustrates a soft wearable driving system mounted on a human body according to one preferred embodiment of the present disclosure;
FIG 2 is a perspective view schematically illustrating the soft wearable driving system according to one embodiment shown in FIG 1;
FIGS. 3 to 7 are diagrams schematically illustrating a method of manufacturing the body of the soft wearable driving system shown in FIG 2 according to each step;
FIGS. 8 to 10 are diagrams schematically illustrating variable rigidity of the body of the soft wearable driving system of FIG 2; and
FIG 11 is a diagram schematically illustrating a sensing operation of a sensor of the soft wearable driving system shown in FIG 2.

### [Best Mode]

Hereinafter, a preferred embodiment of the present disclosure will be described with reference to the accompanying drawings. However, the idea of the present disclosure is not limited to such embodiments. The idea of the present disclosure may be proposed differently by adding, changing, or deleting components constituting the embodiments, which are also within the idea of the disclosure.

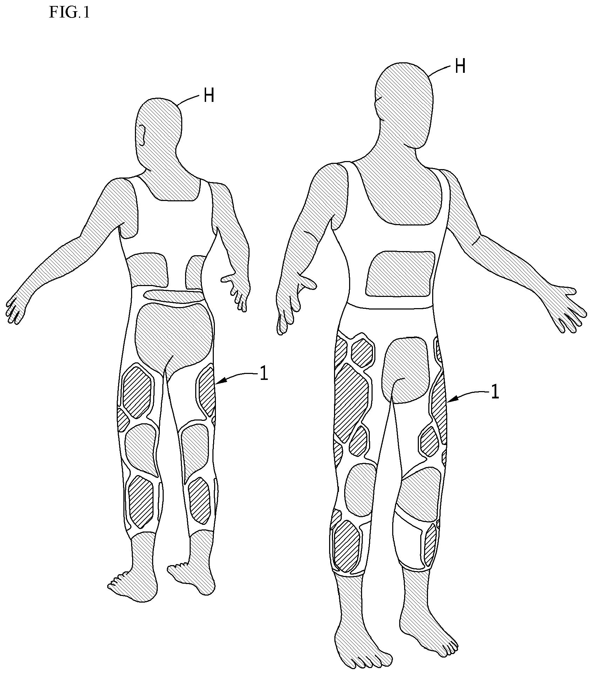

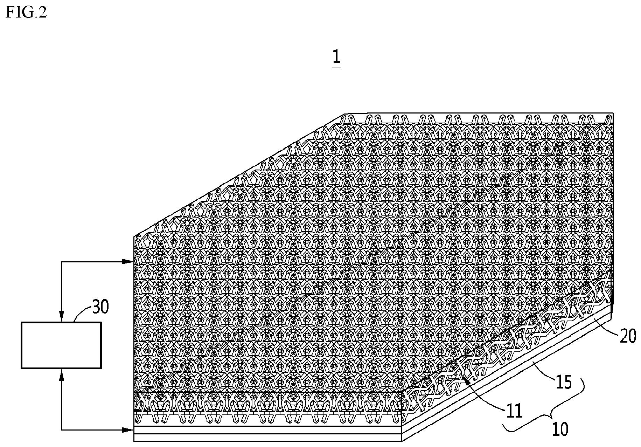

Referring to FIGS. 1 and 2, a soft wearable driving system 1 according to a preferred embodiment of the present disclosure includes a body part 10, a sensor 20, and a controller 30, and is attached to a human body surface of a user H.

For reference, a plurality of soft wearable driving systems 1 described in the present disclosure may be provided to have a predetermined area, and may be attached to a plurality of areas of the human body of a user H, as shown in FIG 1. The number, area, and attachment positions of the soft wearable driving systems 1 are not limited to the illustrated example and may be changed.

The body part 10 is formed of a flexible material capable of being deformed, such as by tension, compression, and bending, and has a shape that extends in the plane. It has a rigidity that varies according to the voltage load. This body part 10 includes a kind of three-dimensional textile actuator, which in this embodiment includes a body 11 and an adhesive layer 15.

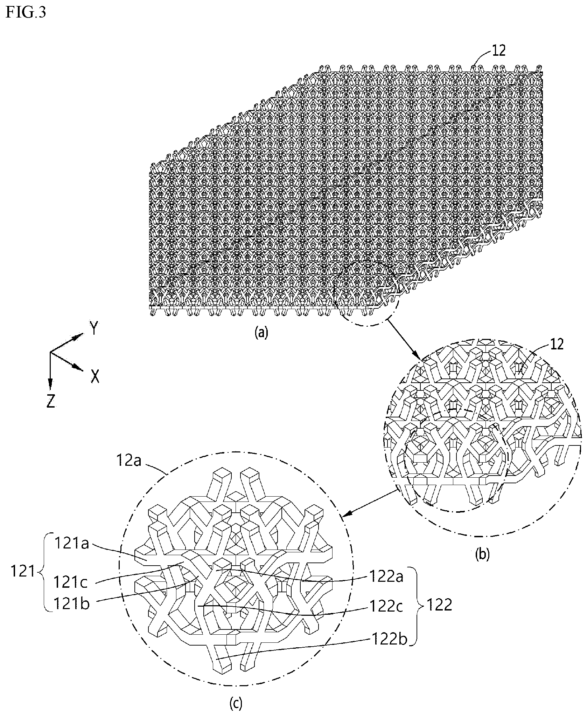

The body 11 includes a metastructure 12, a gel layer 13, and a surface layer 14, as shown in FIGS. 3 to 7. The body 11 is manufactured as shown in FIGS. 3 to 7, which will be described in more detail below.

As shown in (a) of FIG 3, the metastructure 12 is formed from a meta-material, which is a material capable of being elastically deformed in multiple directions, such as up, down, and lateral directions. Here, the metastructure 12 includes a plurality of unit structure cells 12a formed of a meta-material having a negative Poisson's ratio, as shown in the enlarged views in (b) and (c) of FIG 3.

The plurality of unit structure cells 12a may have an interconnected lattice structure or a cross chiral honeycomb structure. The metastructure 12 may include a plurality of widthwise extension stems 121 and a plurality of thicknesswise extension stems 122 to expand and contract in response to a load voltage.

For reference, although the plurality of unit structure cells 12a is shown and illustrated in FIG 3 as having a plurality of widthwise extension stems 121 and a plurality of thicknesswise extension stems 122 connected to each other in a lattice structure, embodiments are not necessarily limited thereto. Forming the plurality of unit structure cells 12a in a cross chiral honeycomb structure may be advantageous for rigidity control compared to the lattice structure.

The plurality of widthwise extension stems 121 includes a plurality of first and second widthwise inclined portions 121a and 121b that extend along a widthwise direction corresponding to the X-axis or Y-axis shown in FIG 3, and a plurality of widthwise connectors 121c that connect the first and second widthwise inclined portions 121a and 121b such that the first and second widthwise inclined portions are inclined with respect to each other.

Also, a plurality of thicknesswise extension stems 122 extends in a thickness direction corresponding to the z-axis shown in FIG 3. The plurality of thicknesswise extension stems 122 includes a plurality of first and second thicknesswise inclined portions 122a and 122b that are inclined in opposite directions and intersect the first and second widthwise inclined portions 121a and 121b, respectively, and a plurality of thicknesswise connectors 122c that connect the first and second thicknesswise inclined portions 122a and 122b such that the first and second thicknesswise inclined portions are inclined with respect to each other. Here, the first and second widthwise inclined portions 121a and 121b are inclined to each form a first angle with respect to the widthwise connector 121c, and the first and second thicknesswise inclined portions 122a and 122b are inclined to each form a second angle different from the first angle with respect to the thicknesswise connector 122c.

Although not shown in detail, the unit structure cell 12 may further include a connecting stem connecting the widthwise extension stem 121 and the thicknesswise extension stem 122 to each other.

By providing a plurality of unit structure cells 12a as described above to form the metastructure 12, the metastructure 12 is easy to manufacture and has excellent rigidity change characteristics when contracting and expanding according to the load voltage.

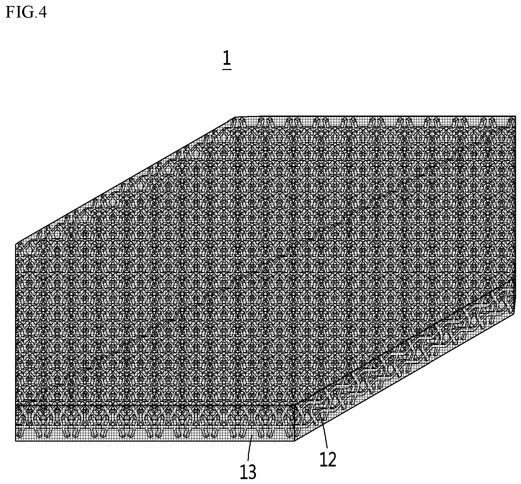

As shown in FIG 4, a gel layer 13 is inserted into the interior of the prepared metastructure 12. The gel layer 13 is prepared from a copolymer including polyvinylidene fluoride-hexafluoropropylene (PVDF-HFP) in the form of a gel, which is inserted into the space inside the metastructure 12. Here, the gel layer 13 is a kind of polymer electrode layer inserted into the metastructure 12, which can induce a change in the shape of the metastructure 12 of a flexible material by changing its rigidity in response to an electric current applied thereto.

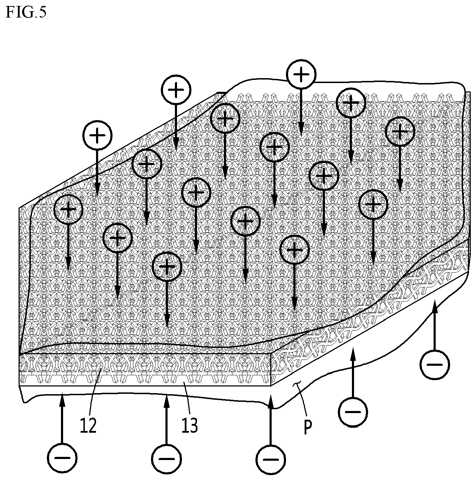

Then, as shown in FIG 5, plasma etching is performed on the surface of the metastructure 12 in which the gel layer 13 is inserted by a gas such as argon or nitrogen to form the surface layer 14 on both sides of the metastructure 12. Here, the surface layer 14 generates a number of cations (+) and electrons (-) by violent collisions between gas molecules in the gas state and ionization. The multiple cations (+) and electrons (-) generated in this way are flowable along the surface layer 14.

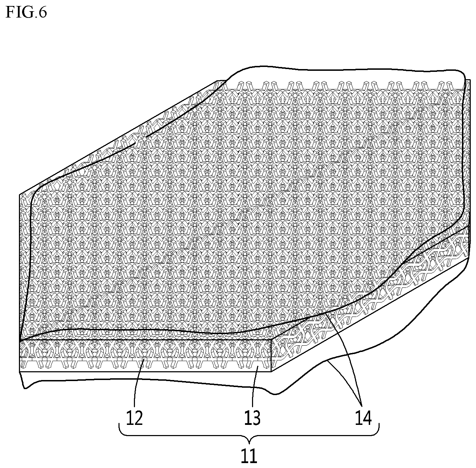

In the metastructure 12 having the surface layer 14 on both sides, the electrode solution is attached to the metastructure 12 to fix the flowable cations (+) and electrons (-) on both sides of the metastructure 12, as shown in FIG 6. Thereby, the cohesion of the cations (+) and electrons (-) on both sides of the metastructure 12 is enhanced.

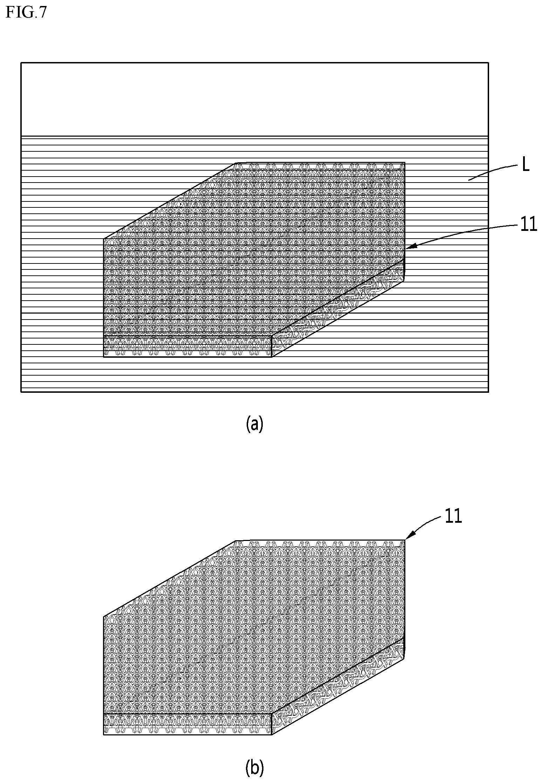

Then, the metastructure 12 having the surface layer 14 in which the cations (+) and electrons (-) remain immobilized is immersed in the ionization solution L, as shown in (a) of FIG 7. Here, by immersing the metastructure 12 in the ionization solution L, ionic migration is accelerated.

Finally, the metastructure separated from the ionization solution L is dried as shown in (b) of FIG 7. Thereby, the body 11 having electrode-activated metastructures 12 is prepared.

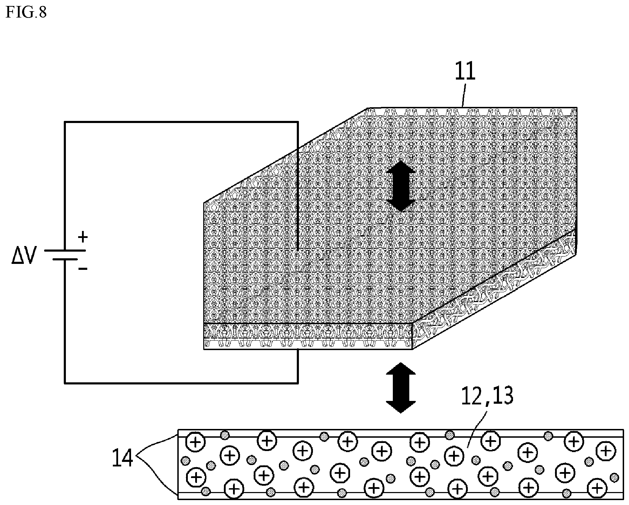

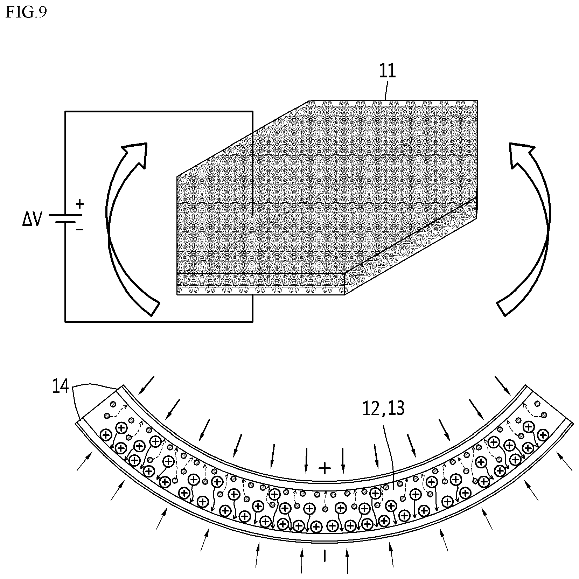

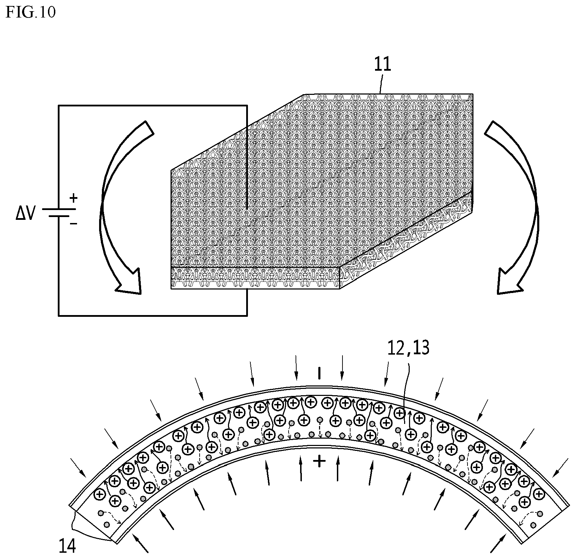

The body 11 prepared in this way is provided with a gel layer 13, which is an intermediate medium layer of the electrode, inserted into the metastructure 12 having flexibility, as shown in FIG 8. Thus, as shown in FIGS. 9 and 10, when a certain voltage is applied to the body 11 according to the magnitude of the load voltage, it may be compressively deformed by electromagnetic properties in the gel layer 13 inserted into the the metastructure 12 due to the form of the metastructure 12 composed of a plurality of unit structure cells 12a having an elastic structure like a spring. In other words, the body 11 including the metastructure 12 in which the gel layer 13 is inserted generates a spring-like variable rigidity in response to deformation of the cells of the metastructure 12 according to a certain voltage.

For reference, FIG 9 schematically illustrates driving the variable bending rigidity of the body 11 in response to a (+) voltage difference greater than or equal to a specific voltage, while FIG 10 schematically illustrates driving the variable bending rigidity in response to a (-) voltage difference less than or equal to a specific voltage. Thus, the body 11 with the flexible material metastructure 12 in which the gel layer 13 is inserted is subjected to tensile, compressive, and bending deformations above or below a certain voltage.

The adhesive layer 15 is laminated on one side of the body 11 with the sensor 20, which will be described later, in between, to provide adhesion. In this case, the adhesive layer 15 provides an adhesive force for attaching the body 11 to the user H, as shown in FIG 1.

The sensor 20 is formed of a flexible material and is provided on one side of the body part 10 to sense electrode activation in response to a voltage load on the body part 10. As shown in FIG 2, the sensor 20 is provided on one side of the body part 10 with the adhesive layer 15 in between, and is integrated with the body part 10 as a body such as a patch. Thereby, the sensor 20 measures the activity of the muscles while attached to the user H.

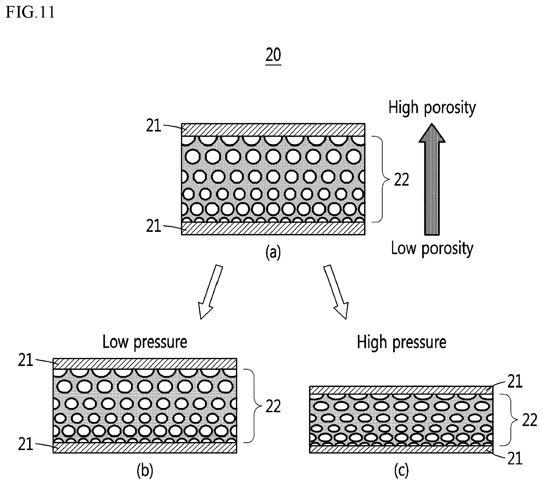

Referring to FIG 11, the sensor 20 is formed as a multiscale sponge layer with pores 23 between a pair of support layers 21. Here, the sponge layer 22 is configured such that the size of the pores 23 increases or decreases from one of the pair of support layers 21 to the other, as shown in (a) of FIG 11. In this case, as shown in (b) of FIG 11, as the size of the pores 23 of the sponge layer 22 becomes progressively larger, it deforms at a lower pressure. As the size of the pores 23 of the sponge layer 22 becomes progressively smaller, it deforms at a higher pressure, as shown in (c) of FIG 11. By utilizing this pressure-dependent deformation of the pores 23 of the sponge layer 22, the muscle activity in each portion of the user H to which the body part 10 is attached may be sensed.

The sensor 20 is not limited to having the sponge layer 22 having the pores 23 shown in FIG 11. In an alternative embodiment, the sensor 20 may include strain gauges printed in a predetermined pattern on one side of the body part 10. In other words, the sensor 20 is a three-dimensional pressure textile sensor, and various alternative embodiments are possible.

The controller 30 controls the voltage applied to the body part 10 in response to the activity information sensed by the sensor 20. When the sensor 20 senses the level of activity of the muscles in each portion by the electrode activation according to the voltage load, the controller 30 induces tensile, compressive, and bending deformation of the body part 10 based on the sensed level of activity. In other words, the controller 30 induces deformation of the body part 10 according to the degree of muscle activity sensed by the sensor 20 to perform muscle strength support and gait support for the user at low voltage.

The operation of driving the soft wearable driving system 1 of the present disclosure having the above configuration will be described with reference to FIGS. 1 and 2.

As shown in FIGS. 1 and 2, the body part 10 having a shape extending in a plane is provided with the adhesive layer 15 and is attached to the user H. In this case, a plurality of body parts 10 may be attached at various locations where muscle support for the user H is required.

The body part 10 is attached to the user H with the sensor 20 positioned therebetween, such that the sensor 20 senses the activity level of the muscles in each portion of the body of the user H. In this case, the sensor 20 is provided as a three-dimensional pressure textile sensor made of a flexible material, and deformation thereof is induced by a pressure difference according to a voltage according to the level of activity of the muscles in each portion (see FIG 11).

Based on the level of activity of the muscles in each portion sensed by the sensor 20, the controller 30 controls the voltage provided to the body part 10. Here, the body part 10 includes a metastructure 12, a gel layer 13 in the form of a gel inserted in the metastructure 12 as shown in FIGS. 3 to 7, and a surface layer 14 on both sides thereof. The controller 30 is connected to the surface layer 14 and applies a predetermined voltage to induce a voltage-dependent deformation of the gel layer 13.

More specifically, when a voltage is applied to the body part 10 as shown in FIGS. 8 to 10, the body part 10 is compressed or tensioned by electromagnetic properties in the gel layer 13 inserted into the metastructure 12 that has elasticity. Thereby, the deformation in the gel layer 13 leads to bending deformation of the metastructure 12, thereby generating a variable rigidity to support the muscle strength of the user H.

While the present disclosure has been described above with reference to preferred embodiments of the present disclosure, it will be appreciated by those skilled in the art that various modifications and changes can be made to the present disclosure without departing from the spirit and scope of the present disclosure as defined in the appended claims.

## Claims

1. A soft wearable driving system comprising:
a body part formed of a deformable flexible material and installed on a human body in a shape extending in a plane, the body part being deformed in a manner of at least one of tensioning, compression, or bending in response to a magnitude of a load voltage;
a sensor arranged on one side of the body part of the flexible material to sense a level of muscle activity in an installation area of the body part on the human body; and
a controller configured to control the load voltage of the body part based on information sensed by the sensor.

2. The soft wearable driving system of claim 1, wherein the body part and the sensor are integrated as one body,
wherein the body part is provided as at least one patch removably attached to the human body with an adhesive layer arranged between the body part and the sensor to provide adhesion.

3. The soft wearable driving system of claim 1, wherein the body part comprises a three-dimensional textile actuator.

4. The soft wearable driving system of claim 1, wherein the sensor comprises a three-dimensional pressure textile sensor or strain gauges printed in a predetermined pattern on one side of the body part.

5. The soft wearable driving system of claim 1, wherein the body part comprises:
a body comprising:
a metastructure formed of a material elastically deformable in multiple directions and having a rigidity variable by electrode activation;
a gel layer of a gel type charged inside the metastructure and deformed in response to a voltage; and
a surface layer formed on both sides of the metastructure by plasma etching such that the voltage is applied thereto; and
an adhesive layer laminated to one side of the body with the sensor positioned between adhesive layer and the body, the adhesive layer providing adhesion.

6. The soft wearable driving system of claim 5, wherein the gel layer comprises a polymer copolymer comprising PolyVinyliDene Fluoride-HexaFluoroPropylene (PVDF-HFP) inserted in the form of a gel into the metastructure.

7. The soft wearable driving system of claim 5, wherein the surface layer is formed by operations comprising: treating a surface of the metastructure with the plasma etching by argon or nitrogen; fixing an electrode solution; and immersing the metastructure in an ionization solution to accelerate ionic migration.

8. The soft wearable driving system of claim 5, wherein the metastructure comprises a plurality of unit structure cells formed from a metamaterial,
wherein the plurality of unit structure cells forms an interconnected lattice structure, or have a cross chiral honeycomb structure.

9. The soft wearable driving system of claim 8, wherein the plurality of unit structure cells comprises a plurality of widthwise extension stems extending in a width direction, and a plurality of thicknesswise extension stems extending in a thickness direction to intersect the plurality of widthwise extension stems,
wherein the plurality of widthwise extension stems comprises:
a plurality of first and second widthwise inclined portions inclined in opposite directions to each other; and
a plurality of widthwise connectors connecting the first and second widthwise inclined portions such that the first and second widthwise inclined portions are inclined with respect to each other,
wherein the plurality of thicknesswise extension stems comprises:
a plurality of first and second thicknesswise inclined portions inclined in opposite directions to each other and intersecting the first and second widthwise inclined portions, respectively; and
a plurality of thicknesswise connectors connecting the first and second thicknesswise inclined portions such that the first and second thicknesswise inclined portions are inclined with respect to each other.

10. The soft wearable driving system of claim 9, wherein the first and second widthwise inclined portions are each inclined to form a first angle with respect to the widthwise connectors,
wherein the first and second thicknesswise inclined portions are inclined to form a second angle different from the first angle with respect to the thicknesswise connectors.

11. The soft wearable driving system of claim 1, wherein the sensor comprises:
a pair of support layers; and
a sponge layer arranged between the pair of support layers and having a plurality of pores, the sponge layer being compressible by a change in pressure in response to the level of muscle activity,
wherein a size of the plurality of pores increases or decreases from one of the pair of support layers to the other.

12. A soft wearable driving system comprising:
a body part having a flexible, deformable structure embedded therein, the body part being deformed in a manner of at least one of tensioning, compression, or bending in response to a change in a load voltage;
a sensor positioned between the body part and a human body to sense ma level of muscle activity in an installation area of the human body having the body part installed therein; and
a controller configured to control the load voltage of the body part based on information detected by the sensor,
wherein the body part and the sensor are integrated as one body and removably attached to at least one place on the human body.

13. The soft wearable driving system of claim 12, wherein the body part comprises a three-dimensional textile actuator having a metastructure,
wherein the sensor comprises a three-dimensional pressure textile sensor or strain gauges printed in a predetermined pattern on one side of the body part.

14. The soft wearable driving system of claim 12, wherein the body part comprises:
a body comprising:
a metastructure formed of a material elastically deformable in multiple directions to enable electrode activation;
a gel layer of a gel type charged inside the metastructure and deformed in response to a voltage; and
a surface layer formed on both sides of the metastructure by plasma etching such that the voltage is applied thereto; and
an adhesive layer laminated to one side of the body with the sensor positioned between adhesive layer and the body, the adhesive layer providing adhesion.

15. The soft wearable driving system of claim 14, wherein the gel layer comprises a polymer copolymer comprising PolyVinyliDene Fluoride-HexaFluoroPropylene (PVDF-HFP) inserted in the form of a gel into the metastructure.

16. The soft wearable driving system of claim 14, wherein the surface layer is formed by operations comprising: treating a surface of the metastructure with the plasma etching by argon or nitrogen; fixing an electrode solution; and immersing the metastructure in an ionization solution to accelerate ionic migration.

17. The soft wearable driving system of claim 14, wherein the metastructure comprises a plurality of unit structure cells formed from a metamaterial,
wherein the plurality of unit structure cells forms an interconnected lattice structure, or have a cross chiral honeycomb structure.

18. The soft wearable driving system of claim 17, wherein the plurality of unit structure cells comprises a plurality of widthwise extension stems extending in a width direction, and a plurality of thicknesswise extension stems extending in a thickness direction to intersect the plurality of widthwise extension stems,
wherein the plurality of widthwise extension stems comprises:
a plurality of first and second widthwise inclined portions inclined in opposite directions to each other; and
a plurality of widthwise connectors connecting the first and second widthwise inclined portions such that the first and second widthwise inclined portions are inclined with respect to each other,
wherein the plurality of thicknesswise extension stems comprises:
a plurality of first and second thicknesswise inclined portions inclined in opposite directions to each other and intersecting the first and second widthwise inclined portions, respectively; and
a plurality of thicknesswise connectors connecting the first and second thicknesswise inclined portions such that the first and second thicknesswise inclined portions are inclined with respect to each other.

19. The soft wearable driving system of claim 18, wherein the first and second widthwise inclined portions are each inclined to form a first angle with respect to the widthwise connectors,
wherein the first and second thicknesswise inclined portions are inclined to form a second angle different from the first angle with respect to the thicknesswise connectors.

20. The soft wearable driving system of claim 12, wherein the sensor comprises:
a pair of support layers; and
a sponge layer arranged between the pair of support layers and having a plurality of pores, the sponge layer being compressible by a change in pressure in response to the level of muscle activity,
wherein a size of the plurality of pores increases or decreases from one of the pair of support layers to the other.
